# EUROPEAN PATENT SPECIFICATION

(11) **EP 2 909 885 B1**
(45) Date of publication and mention of the grant of the patent: **03.01.2024**
(21) Application number: 12886650.6
(22) Date of filing: 19.10.2012
(51) Int. Cl.: H01M 8/0234, H01M 8/026, H01M 8/241, H01M 8/0254, H01M 8/0267, H01M 8/0213, H01M 8/0221, H01M 8/0228, H01M 8/0297, H01M 8/0263, H01M 8/10

(54) **LOW COST FUEL CELL COMPONENTS**
KOSTENGÜNSTIGE BRENNSTOFFZELLENKOMPONENTEN
COMPOSANTS DE PILE À COMBUSTIBLE DE FAIBLE COÛT

(43) Date of publication of application: 26.08.2015
(60) Divisional application: 16156513.0
(73) Proprietor: Audi AG, 85045 Ingolstadt (DE)
(72) Inventor: PATTERSON, Timothy, W., West Hartford, CT 06107 (US); MADDEN, Thomas, H., Glastonbury, CT 06033 (US); DARLING, Robert, M., South Windsor, CT 06074 (US); ALLEN, Glenn, M., Vernon, CT 06066 (US)
(74) Representative: Hentrich Patent- & Rechtsanwaltspartnerschaft mbB
(86) International application number: PCT/US2012/061194
(87) International publication number: WO 2014/062198

(56) References cited:
- EP-A1- 1 699 100
- EP-A2- 1 099 266
- EP-B1- 1 099 266
- EP-B1- 2 801 121
- DE-A1-102005 002 174
- JP-A- H11 111 307
- JP-A- S58 145 067
- JP-A- 2008 047 293
- US-A- 3 188 242
- US-A- 4 853 301
- US-A- 5 804 326
- US-A1- 2002 127 464
- US-A1- 2003 235 735
- US-A1- 2004 018 412
- US-A1- 2004 131 533
- US-A1- 2005 164 070
- US-A1- 2006 068 265
- US-A1- 2007 111 078
- US-A1- 2008 220 154
- US-B2- 6 617 068
- US-B2- 6 818 165

## Description

### Technical Field

Fuel cell reactant and coolant flow field plates are extruded with straight flow channel grooves, or have straight grooves provided by gang or arbor milling, made in layers with rotary dies, stamped, or by impregnated flow channel definition.

### Background Art

Proton exchange membrane (PEM) fuel cells have advantageously been provided with porous, hydrophilic reactant gas flow field plates, typically with either the fuel or oxidant reactant gas plate having coolant flow field channels provided as grooves extending inward from the surface opposite to the surface having reactant gas flow field grooves formed therein. These have been referred to as water transport plates. In many instances, the grooves forming flow fields have been shaped to provide various operational objectives. Provision of shaped grooves, with sufficient dimensional tolerance, has required end milling, or similar processes which are time-consuming and expensive. Provision of coolant grooves on opposite sides of flow field plates from reactant grooves also require the use of end mills for precise depth and positioning.

Usage of porous, hydrophilic reactant and coolant flow plates have proven to be particularly advantageous in fuel cells providing energy to drive electric vehicles. However, the utilization in commonly available vehicles is subject to extreme cost restraints in comparison with other fuel cell applications.

A large percentage of the cost of fuel cells currently powering electric vehicles is the cost of producing the reactant and/or coolant flow field plates.

US 2004/0131533 A1 describes a method for incorporating graphite into flat graphite bodies without the need of a subsequent graphitization step, for which a large amount of energy would be needed. This is done by including graphite particles into the batch under high shear and extruding the batch into a plate. Grooves are incorporated into the plate after their production and the plates are cut before, after or during the incorporation of the grooves.

The US 2007/0111078 A1 describes a method for forming a bipolar plate for a fuel cell. The plate is formed using a molding process in a mold, which could include as an alternative also extrusion. In this molding step grooves are simultaneously incorporated into the surfaces of the plate.

US 2002/0127464 A1 describes the production of separator plates. In a first step the starting materials are extruded into a sheet, which is further thinned by rollers. The surface is additionally modified by incorporation surface structures like grooves using specific rollers. After a heating step, the separators plates are created from the sheet by means of a blanking step.

EP 1 699 100 A1 describes the cooling of a stack of fuel cell. The liquid coolant, which has cooled the fuel cell stack vaporizes and is condensed by a condenser.

US 2005/164070 A1 describes an extruded bipolar plate for a fuel cell. The bipolar plate is fabricated by an extrusion process so that the extruder die forms linear channels in the extrusion for the flow channels in the plate. US 6 818 165 B2 describes a method for fabricating a fluid flow field plate with straight, parallel fluid flow field channels using a roller.

US 6 617 068 B2 describes a bi-zone water transport plate for a fuel cell wherein the plate includes a water permeability zone and a bubble barrier zone.

US 4 853 301 A shows a fuel cell flow field plate having a first flow field on its first surface and a second flow field plate on its opposite surface. The channels on the first surface are skewed in relation to its edges, whereas the channels on the second surface are skewed the same amount in the opposite direction such that the contact areas of the plates through the electrodes are formed in a crisscross arrangement. The compressive load on the plates is spread when assembled into a fuel cell stack assembly.

JP 2008 047 293 A shows a fuel cell flow field plate having channels that are angled relative to its edges to ensure that pressure is spread over the plate and to ensure that the neighboring gas diffusion layer is not pressed into the channels when assembled to a fuel cell stack.

DE 10 2005 002 174 A1 describes a gas diffusion layer having a three dimensional structure to assure an even distribution of the fluid flowing therethrough.

US 3 188 242 A describes gas diffusion electrodes having channels formed therein that may be at an angle with respect to another. The fuel cell electrodes are made of a flat plate of functionalized porous carbon. US 2003 / 235 735 A1, EP 2 801 121 A1 and JP S58 145 067 A describe fuel cell flow field plates with straight parallel flow channel grooves that are arranged perpendicular to the edges of the plates.

It is an object of the invention to provide a method for the production of fuel cell flow field plates with improved performance eliminating expensive manufacturing steps. Further objects of the invention are to provide a method for forming an improved fuel cell stack, an improved fuel cell flow field plate, an improved set of fuel cell flow field plates and an improved fuel cell stack.

### Summary

These tasks are solved by the claims 1, 3, 4 and 6, defining, respectively, the scope of present invention. Reactant and/or coolant flow field plates are provided with processes which eliminate the need for end milling or other expensive manufacturing steps. One particular cost reducing provision herein is utilizing either flow field plates having only straight grooves extruded therein for flow channels, grooving flat plates with gang or arbor milling to accomplish flow channels, impregnating water-pervious flow field plates with hydrophobic coolant channel demarcations, or stamping of components with rotary dies to provide coolant-flowing voids or corrugations, whereby in any method according to the present invention, in the fabrication of at least some of the flow field plates, the extrusion die is configured to create straight grooves separated by ridges in the elongated sheets; and in a step or steps thereafter, the method includes cutting the elongated sheets of material to provide flow field plates of desired size for fuel cell stacks, wherein said elongated sheet of material having the straight grooves is thereafter cut along cutting lines into a plurality of pieces at an oblique angle with respect to said straight grooves, wherein a plurality of oxidant reactant flow field plates with edges at an oblique angle with respect to said straight grooves is formed.

In one embodiment, fuel flow plates are made by extruding flat porous, hydrophilic carbonaceous sheets, either a) with the flow field channels provided by the extrusion die or b) extruded flat, followed by gang or arbor milling of channels. Long sheets are extruded and/or milled and then cut into proper size for use in a designated fuel cell.

In another embodiment, oxidant flow fields are similarly extruded with channels provided in the extrusion die, or as long flat sheets followed by gang or arbor milling of straight flow fields, whereby in any method according to the present invention, in the fabrication of at least some of the flow field plates, the extrusion die is configured to create straight grooves separated by ridges in the elongated sheets; and in a step or steps thereafter, the method includes cutting the elongated sheets of material to provide flow field plates of desired size for fuel cell stacks, wherein said elongated sheet of material having the straight grooves is thereafter cut along cutting lines into a plurality of pieces at an oblique angle with respect to said straight grooves, wherein a plurality of oxidant reactant flow field plates with edges at an oblique angle with respect to said straight grooves is formed. Thereafter, the extruded and/or milled sheets with straight flow fields are trimmed at an angle to provide successive elements having edges which are at a nominal angle with respect to flow channels of each piece, to accommodate coolant flow channels. In another embodiment, a cooler plate is made by rotary die, cutting two layers: one providing voids forming straight coolant flow channels, and the other providing voids forming inlet and exit header channels, the two layers being superposed when in place for use. In an alternative to this embodiment, the two layers may be bonded together before utilization in a fuel cell stack.

In another embodiment, a cooler plate is made by stamping a metal sheet in a corrugated fashion so as to provide coolant channels which are open to both reactant flow surfaces, when inserted therebetween.

In another embodiment, a coolant flow field plate is made by impregnating a carbonaceous porous, hydrophilic substrate with hydrophobic material, such as a polymer, so as to delineate channels in the substrate, thereby directing the flow of water or other coolant as desired.

Other variations will become more apparent in the light of the following detailed description of exemplary embodiments, as illustrated in the accompanying drawings.

### Brief Description of the Drawings

Fig. 1, as such not fully according to the invention as presently claimed but illustrating a sub-combination of features of the claimed combination and/or additional features of its preferred embodiments and therefore useful for understanding the invention and its context, is a simplified plan view of an elongated strip of extruded porous, hydrophilic carbonaceous substrate material, with straight fuel flow channels formed therein either by the extrusion die or gang milled or arbor milled after being extruded in a flat form.

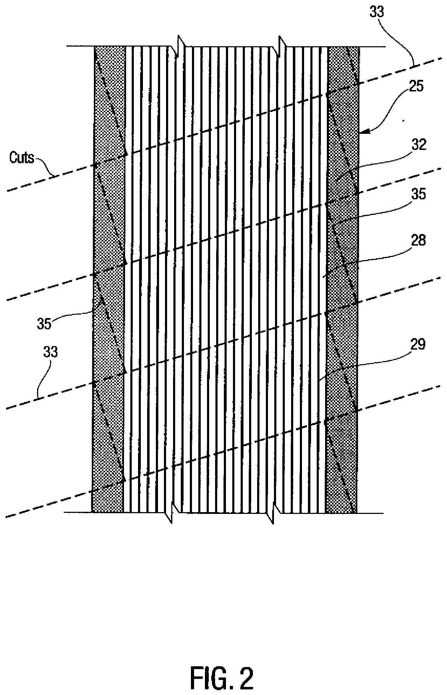

Fig. 2, illustrating a key element of the present invention, is a simplified plan view of an elongated sheet of porous, hydrophilic carbonaceous substrate material suitable for use as a plurality of oxidant reactant gas flow field plates, illustrating the manner of cutting same, the sheet being extruded with straight grooves forming reactant flow channels, or having straight grooves gang milled or arbor milled after being extruded flat. In any method according to the present invention, in the fabrication of at least some of the flow field plates, the extrusion die is configured to create straight grooves separated by ridges in the elongated sheets; and in a step or steps thereafter, the method includes cutting the elongated sheets of material to provide flow field plates of desired size for fuel cell stacks, wherein said elongated sheet of material having the straight grooves is thereafter cut along cutting lines into a plurality of pieces at an oblique angle with respect to said straight grooves, wherein a plurality of oxidant reactant flow field plates with edges at an oblique angle with respect to said straight grooves is formed.
Fig. 3, which is not part of the invention, is a plan view of a porous, hydrophilic coolant plate wherein the coolant flow paths are formed by hydrophobic barriers, such as a polymer, impregnated therein.
Fig. 4, which is not part of the invention, is a plan view of one layer of a cooler plate formed of a solid sheet by punching out voids in which coolant is to flow.
Fig. 5, which is not part of the invention, is a plan view of a second layer of the cooler plate of Fig. 4 with voids forming the inlet and exit headers stamped out of a solid sheet.
Fig. 6, which is not part of the invention, is a simplified cross sectional view of a stamped, corrugated cooler plate providing coolant channels to both the fuel flow field plate and the oxidant flow field plate.

### Mode(s) of Implementation

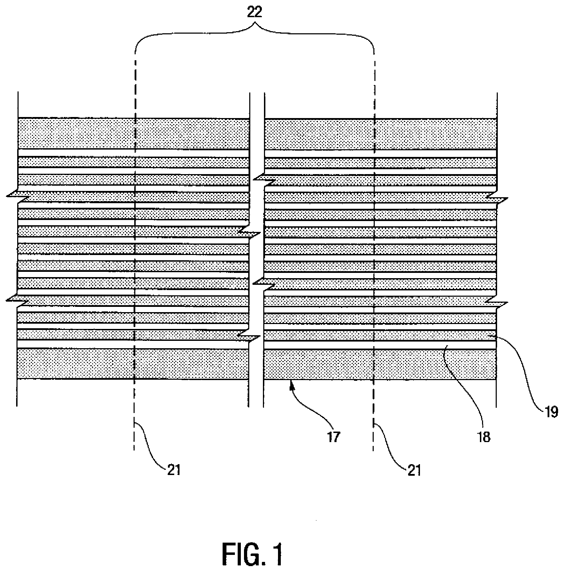

Referring now to Fig. 1 , an elongated sheet of porous hydrophilic carbonaceous material 17 includes straight grooves 18 separated by ridges 19 which are either formed therein by the extrusion die during an extrusion process, or formed therein by gang milling or arbor milling after the sheet 17 has been extruded in a plain, flat shape. Having the grooves straight permits forming them during extrusion, and also permits forming the grooves using high speed, low cost gang milling or arbor milling. The sheet 17 is thereafter cut, orthogonally with respect to the grooves 28, along the dashed lines 21 utilizing any suitable process such as rotary slicing or end milling to form a plurality of single fuel flow field plates 22.

In Fig. 2, illustrating a key element of the present invention, an elongated, porous, hydrophilic carbonaceous sheet 25 has a plurality of straight grooves 28 separated by ridges 29 formed therein either during the extrusion process, or after the sheet is extruded in a flat form, by arbor milling or gang milling. Thereafter, the sheet 25 may be cut, at an angle with respect to the grooves 28, into a plurality of individual oxidant flow field plates 32 as indicated by dashed lines 33. Even though the grooves 28 may need to be at an angle compared to the edges 35 of each oxidant flow field plate 32, this is easily accommodated by first forming the elongated sheet 25 with straight grooves, either by gang or arbor milling or by extrusion, and thereafter, cutting the flow fields at an angle with respect to the grooves. In any method according to the present invention, in the fabrication of at least some of the flow field plates, the extrusion die is configured to create straight grooves separated by ridges in the elongated sheets; and in a step or steps thereafter, the method includes cutting the elongated sheets of material to provide flow field plates of desired size for fuel cell stacks, wherein said elongated sheet of material having the straight grooves is thereafter cut along cutting lines into a plurality of pieces at an oblique angle, as illustrated e.g. in this figure, with respect to said straight grooves, wherein a plurality of oxidant reactant flow field plates with edges at an oblique angle with respect to said straight grooves is formed.

Cooler plates may be formed by extrusion with or without additional milling as described with respect to Figs. 1 and 2 hereinbefore if found desirable in any particular implementation of a fuel cell stack.

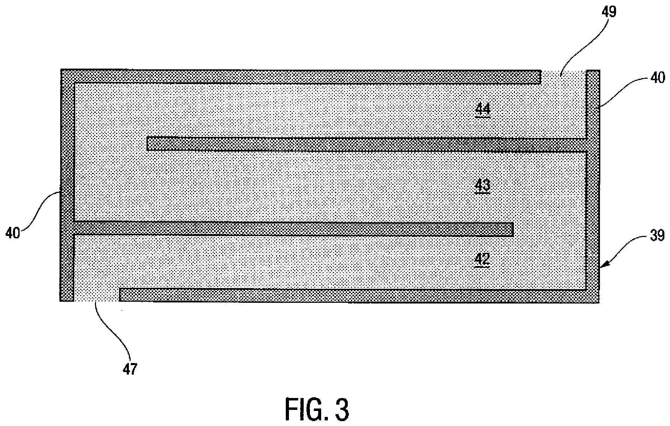

Fig. 3 illustrates a cooler plate 39, wherein the areas 40 are impregnated with hydrophobic material, such as PTFE or other polymer. The hydrophobicity of the impregnated areas channel the coolant into passageways 42-44 from an inlet 47 to an exit 49. The hydrophobic coolant channel demarcations may be easily formed by first applying a suitable mask, which may be a mask representing a large number of cooler plates, after which a suitable polymer can be overlaid or sprayed on the masked material and then heated to above the melting point of the polymer, under pressure if necessary in any case, and then cooled to the solidification temperature of the polymer while still under pressure, in accordance with known techniques.

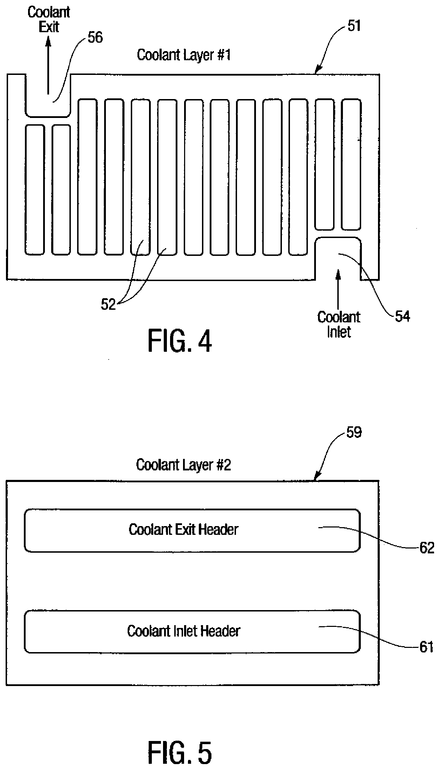

Another form of cooler plate is illustrated in Figs. 4 and 5. In Fig. 4, a first coolant flow channel layer 51 has coolant channel voids 52 stamped therethrough. The layer 51 may be thin stainless steel, nickel, or other suitable metal, or a water impervious carbonaceous sheet typical of those used in fuel cells. The stamping also provides a coolant inlet void 54 and a coolant exit void 56. A second layer 59 of the cooler plate is provided by stamping voids to create a coolant inlet header 61 and a coolant exit header 62. When the layer 59 of Fig. 5 is juxtaposed over the layer 51 of Fig. 4, a cooler plate is formed. The two layers may be adhered together, such as by any form of bonding, or may simply be juxtapositioned in the assembly of a fuel cell stack.

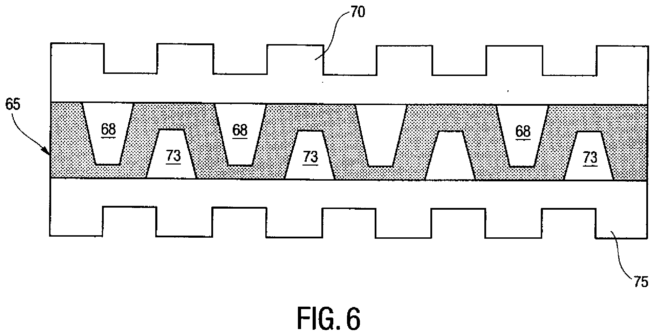

Another simple form of cooler plate 65 is illustrated in Fig. 6. The plate 65 is stamped into a corrugated shape that provides coolant flow passageways 68 adjacent a porous, hydrophilic cathode flow field plate 70, and coolant passageways 73 adjacent a porous, hydrophilic anode flow field plate 75. The ends of the corrugations may be crimped or they may be filled with suitable seal material of the type heretofore used in fuel cells.

The various reactant flow field plates and cooler plates may be used in selected combinations to be effective in any given implementation of a fuel cell stack therewith. The fuel reactant flow field plates may each be disposed on one side of a related one of a plurality of membrane electrode assemblies (MEAs), the oxidant reactant flow field plates may each be disposed on a second side of the MEAs, and the cooler plates may be disposed between oxidant and fuel flow field plates, to form a fuel cell stack.

## Claims

1. A method comprising: forming a fuel cell fluid flow field plate (22, 32) by extruding carbonaceous elongated sheets (17; 25) of material with an extrusion die, wherein the extrusion die is configured to create straight grooves (18; 28) separated by ridges (19) in the elongated sheets (17; 25); and
thereafter cutting the elongated sheets (17; 25) of material to provide flow field plates (22; 32) of desired size for fuel cell stacks, wherein
said elongated sheet (17; 25) of elongated carbonaceous material is porous and hydrophilic, and said grooves (18; 28) comprise reactant gas flow fields,
**characterized in that**
said elongated sheet (25) of material having the straight grooves (28) is thereafter cut along cutting lines (33) into a plurality of pieces at an oblique angle with respect to said straight grooves (28), wherein a plurality of oxidant reactant flow field plates (32) with edges (35) at an oblique angle with respect to said straight grooves (28) is formed.

2. The method according to claim 1 further **characterized in that**:
said elongated sheet (17) of material having grooves is thereafter cut, orthogonally with respect to the straight grooves (18), into a plurality of pieces to form fuel reactant gas flow field plates (22).

3. A method for forming a fuel cell stack, including steps of: extruding carbonaceous elongated sheets (17; 25) of material with an extrusion die, wherein the extrusion die is configured to create straight grooves (18; 28) separated by ridges (19) in the elongated sheets (17; 25);
cutting some of said elongated sheets (17) of material having the straight grooves (18), orthogonally with respect to the grooves (18), into a plurality of pieces to form fuel reactant gas flow field plates (22), and cutting others of said elongated sheets (25) of material having grooves (28) into a plurality of pieces at an oblique angle with respect to said straight grooves (28), wherein a plurality of oxidant reactant gas flow field plates (32) with edges (35) at an oblique angle with respect to said straight grooves (28) is formed;
providing cooler plates (39; 51, 59; 65) of thin sheet material; and disposing each of a plurality of membrane electrode assemblies between first sides of one of said fuel reactant gas flow field plates (22) and one of said oxidant reactant gas flow field plates (32), with one of said cooler plates (39; 51, 59; 65) disposed between second sides of said reactant gas flow field plates (22, 32) to form a fuel cell stack.

4. A fuel cell fluid flow field plate (32) obtainable by a method according to claim 1.

5. A set of fuel cell fluid flow field plates, the set comprising at least one fuel cell flow field plate (32) according to claim 4 and at least one fuel cell flow field plate (22) obtainable by a method according to claim 2.

6. A fuel cell stack obtainable by a method according to claim 3.

## Patentansprüche

1. Verfahren, umfassend: Formen einer Brennstoffzelle-Fluidstörmungsfeldplatte (22, 32) durch Extrudieren kohlenstoffhaltiger langgestreckten Platten (17;25) aus einem Material mit einer Extrusiosdürse, wobei die Extrusionsdrüse so konfiguriert ist, dass gerade Rillen (18; 28) erzeugt werden, die durch Kanten (19) in langgestreckte Platten (17; 25) getrennt werden; und anschließendes Schneiden der langgestreckten Materialplatten (17; 25), um Strömungsfeldplatten (22;32) der gewünschten Größe für einen Brennstoffzellenstapel zu schaffen, wobei
die langgestreckten Platten (17;25) aus langgestrecktem kohlenstoffhaltigen Material porös und hydrophil sind, und die Rillen (18, 28) Strömungsfelder für Reaktionsgas umfassen, **dadurch gekennzeichnet, dass** die langegestreckte Platte (25) aus einem Material mit den geraden Rillen (28) anschließend entlang von Schnittlinien (33) in eine Vielzahl von Stücken unter einem schrägen Winkel in Bezug auf die geraden Rillen (28) geschnitten wird, wobei eine Vielzahl von Oxidationsmitte-Reaktionsmittel-Strömungsfeldplatten (32) mit Kanten (35) in einem schrägen Winkel in Bezug auf die geraden Rillen (28) gebildet werden.

2. Verfahren nach Anspruch 1, **dadurch gekennzeichnet, dass** die langgestreckte Materialplatte (17) mit Rillen anschließend orthogonal zu den geraden Rillen (18) in eine Vielzahl von Stücken geschnitten wird, um Brennstoff-Reaktionsgas-Strömungsfeldplatten (22) zu bilden.

3. Verfahren zur Herstellung eines Brennstoffzellenstapels, umfassend die Schritte:
Extrudieren von kohlenstoffhaltigen langgestreckten Materialplatten (17, 25), die mit einer Extrusionsdrüse extrudiert werden, wobei die Extrusionsdrüse so konfiguriert ist, dass gerade Rillen (18,28) in den langgestreckten Platten (17, 25) erzeugt werden, die durch Kanten (19) getrennt sind;
Teile dieser langgestreckten Platen (17) mit geraden Rillen (18) werden orthogonal zu den Rillen (18) in mehrere Stücke geschnitten, um Brennstoff-Reaktant-Gasfeld-Platten (22) zu bilden, und andere Teile dieser langgestreckten Bleche (25) mit geraden Rillen (28) werden in mehrere Stücke geschnitten, wobei diese geraden Rillen im schrägen Winkel zu den geraden Rillen (28) geschnitten werden, wobei mehrere oxidierende Reaktant-Gas-Feld-Platten (32) mit Kanten (35) in einem schrägen Winkel zu den geraden Rillen (28) gebildet werden;
Bereitstellen von Kühlplatten (39, 51, 59, 65) aus dünnem Blechmaterial; und
Anordnen jeder aus einer Vielzahl von Membranelektrodenanordnungen zwischen den ersten Seiten einer der Brennstoff-Reaktionsgas-Strömungsfeldplatten (22) und einer der Oxidationsmittel-Reaktionsgas-Strömungsfeldplatten (32), wobei eine der Kühlplatten (39, 51, 59, 65) zwischen den zweiten Seiten der Reaktionsgas-Strömungsfeldplatten (22, 32) angeordnet ist, um einen Brennstoffzellenstapel zu bilden.

4. Brennstoffzellen-Fluidströmungsfeldplatte (32), die nach dem Verfahren nach Anspruch 1 hergestellt ist.

5. Set aus Brennstoffzellen- Fluidströmungsfeldplatte, bestehend aus mindestens einer Brennstoffzellen- Fluidströmungsfeldplatte (32) nach Anspruch 4 und mindestens einer Brennstoffzellen- Fluidströmungsfeldplatte (22), die nach dem Verfahren nach Anspruch 2 hergestellt ist.

6. Brennstoffzellenstapel, der nach dem Verfahren nach Anspruch 3 hergestellt ist.

## Revendications

1. Procédé comprenant : la formation d'une plaque de champ d'écoulement de fluides pour piles à combustible (22, 32) par extrusion de feuilles allongées carbonées (17 ; 25) d'un matériau avec une filière d'extrusion, dans lequel la filière d'extrusion est configurée pour créer des rainures droites (18 ; 28) séparées par des nervures (19) dans les feuilles allongées (17 ; 25) ; et
puis la découpe des feuilles allongées (17 ; 25) de matériau pour fournir des plaques de champ d'écoulement (22; 32) de taille souhaitée pour des empilements de piles à combustible, dans lequel
ladite feuille allongée (17 ; 25) de matériau carboné allongé est poreuse et hydrophile, et lesdites rainures (18 ; 28) comprennent des champs d'écoulement de réactif gazeux,
**caractérisé en ce que**
ladite feuille allongée (25) de matériau présentant les rainures droites (28) est ensuite découpée le long de lignes de découpe (33) en une pluralité de morceaux selon un angle oblique par rapport auxdites rainures droites (28), dans lequel une pluralité de plaques de champ d'écoulement de réactif oxydant (32) avec des bords (35) selon un angle oblique par rapport auxdites rainures droites (28) sont formées.

2. Procédé selon la revendication 1 **caractérisé en outre en ce que** :
ladite feuille allongée (17) de matériau présentant des rainures est ensuite découpée, perpendiculairement par rapport auxdites rainures droites (18), en une pluralité de morceaux pour former des plaques de champ d'écoulement de réactif combustible gazeux (22).

3. Procédé de formation d'un empilement de piles à combustible, incluant des étapes de :
extrusion de feuilles allongées carbonées (17 ; 25) de matériau avec une filière d'extrusion, dans lequel la filière d'extrusion est configurée pour créer des rainures droites (18 ; 28) séparées par des nervures (19) dans les feuilles allongées (17 ; 25) ;
découpe de certaines desdites feuilles allongées (17) de matériau présentant les rainures droites (18), perpendiculairement auxdites rainures (18), en une pluralité de morceaux pour former des plaques de champ d'écoulement de réactif combustible gazeux (22), et découpe d'autres desdites feuille allongées (25) de matériau présentant des rainures (28) en une pluralité de morceaux selon un angle oblique par rapport auxdites rainures droites (28), dans lequel une pluralité de plaques de champ d'écoulement de réactif oxydant gazeux (32) avec des bords (35) selon un angle oblique par rapport auxdites rainures droites (28) sont formées ;
fourniture de plaques de refroidisseur (39 ; 51, 59 ; 65) de matériau en feuille mince ; et disposition de chacune d'une pluralité d'ensembles membranes-électrodes entre des premiers côtés d'une desdites plaques de champ d'écoulement de réactif combustible gazeux (22) et d'une desdites plaques de champ d'écoulement de réactif oxydant gazeux (32), l'une desdites plaques de refroidisseur (39 ; 51, 59 ; 65) étant disposée entre des seconds côtés desdites plaques de champ d'écoulement de réactif gazeux (22, 32) pour former un empilement de piles à combustible.

4. Plaques de champ d'écoulement de fluide pour piles à combustible (32) pouvant être obtenues par un procédé selon la revendication 1.

5. Ensemble de plaques de champ d'écoulement de fluide pour piles à combustible, l'ensemble comprenant au moins une plaque de champ d'écoulement pour piles à combustible (32) selon la revendication 4 et au moins une plaque de champ d'écoulement pour piles à combustible (22) pouvant être obtenue par un procédé selon la revendication 2.

6. Empilement de piles à combustible pouvant être obtenu par un procédé selon la revendication 3.
